# EUROPÄISCHE PATENTSCHRIFT

(11) **EP 4 013 976 B1**
(45) Veröffentlichungstag und Bekanntmachung des Hinweises auf die Patenterteilung: **11.09.2024**
(21) Anmeldenummer: 20740290.0
(22) Anmeldetag: 10.07.2020
(51) Int. Cl.: F16G 1/10, F16G 1/28, F16H 7/02

(54) **SCHRÄGVERZAHNTER ANTRIEBSRIEMEN**
HELICALLY TOOTHED DRIVE BELT
COURROIE D'ENTRAÎNEMENT À DENTURE HÉLICOÏDALE

(30) Priorität: 12.08.2019 DE 102019212056
(43) Veröffentlichungstag der Anmeldung: 22.06.2022
(73) Patentinhaber: ContiTech Deutschland GmbH, 30175 Hannover (DE)
(72) Erfinder: FISS, Tim, 30419 Hannover (DE); MELZ, Thomas, 30419 Hannover (DE); SENER, Guevenc, 30419 Hannover (DE); TEVES, Reinhard, 30419 Hannover (DE)
(74) Vertreter: Continental Corporation
(86) Internationale Anmeldenummer: PCT/EP2020/069679
(87) Internationale Veröffentlichungsnummer: WO 2021/028133

(56) Entgegenhaltungen:
- WO-A1-2017/164135
- WO-A1-2018/198657
- DE-A1- 102013 103 901
- DE-T2- 69 222 439
- JP-A- 2000 346 138
- US-A- 5 611 745
- US-A1- 2007 137 766
- US-B1- 6 685 785

## Beschreibung

Die Erfindung betrifft einen schrägverzahnten Antriebsriemen aus elastomerem Material mit innenliegenden und in Längsrichtung des Antriebsriemens angeordneten Zugsträngen aus Aramidfasern.

Solche Antriebsriemen (zum Beispiel JP2000346138A) sind bekannt. So offenbart beispielsweise die DE 10 2011 002 230 A1 einen Antriebsriemen mit einem Grundkörper aus einem polymeren Werkstoff und Zugsträngen aus Aramid, wobei die Litzen einen besonderen Zwirnfaktor aufweisen. Solche Antriebsriemen werden in Fahrzeugen zum Antrieb von weniger belasteten Nebenaggregaten verwendet. Auch sind Anwendungen in Haushaltsgeräten üblich.

Auch die DE 11 2008 001 564 T5 offenbart einen schrägverzahnten Synchronriemen mit einer speziellen Oberflächenbehandlung aus Silikonöl, bei dem die Zugsträngen aus einem Material hergestellt sind, welches eine Mischung von Aramidfasern, Glasfasern und anderen Faserwerkstoffen beinhaltet. Die hier offenbarten Zahnriemen sind für kleine Präzisionsmaschinen vorgesehen, beispielsweise als Antriebsriemen für Druckerschlitten in Büromaschinen.

Die US 2007/0137766 offenbart einen schrägverzahnten Antriebsriemen, dessen Zugstränge um sich selbst gedreht Konstruktionen aufweisen und die immer nur eine Drehrichtung im Kord zeigen. Diese Drehrichtung ist der Schrägverzahnung entgegengerichtet, um eine Ablaufneigung (side tracking) der Antriebsriemen klein zu halten. Erfahrungsgemäß zeigen solche Konstruktionen zwar die gewünschte geringe Ablaufneigung sind aber Konstruktionen mit Korden in entgegengesetzte Drehrichtung im dynamischen Verhalten unterlegen.

Auch für industrielle Anwendungen werden Zahnriemen mit Zugsträngen aus Aramid eingesetzt. Diese Zahnriemen bestehen üblicherweise aus Polychloroprenkautschuk und zeigen durch die eingebetteten Zugstränge aus Aramid eine hohe Längssteifigkeit und damit eine entsprechende Positionsgenauigkeit.

Ein mittlerweile wichtiges Anwendungsgebiet für Antriebsriemen sind Servolenkungen in Kraftfahrzeugen. Elektromechanische Servo-Lenksystem ersetzen in heutigen Kraftfahrzeugen zunehmend andere Systeme der Lenkunterstützung, wie zum Beispiel elektrohydraulische Lenksysteme und natürlich auch direkt lenkende Systeme. Einer der Gründe hierfür ist die relativ einfache Möglichkeit, solche Systeme elektronisch zu steuern und zu regeln, insbesondere im Zusammenhang mit der fortschreitenden Verbreitung von Fahrerassistenzsystemen, wie etwa Spurhaltesystemen, Einparksystemen etc., bis hin zu Systemen für das autonome Fahren.

Die elektromotorische Unterstützung solcher Servo-Lenksysteme wird über ein Getriebe entweder auf die Lenksäule oder aber auf eine Lenkstange/Zahnstange aufgebracht. Bisher ist üblicherweise auch noch ein mechanischer Durchgriff der Lenkraddrehung auf die Lenkstange vorgesehen, so dass die Servo-Lenkung ihrem Namen entsprechend über die verschiedenen Arten der Getriebe lediglich ein Unterstützungsmoment überträgt. Bei der Entwicklung zu Steer-by-Wire Systemen erfolgt dann die Lenkung dann allerdings nur noch durch die elektronische Sensierung von Lenkbewegungen am Lenkrad und deren Übertragung auf entsprechend gesteuerte Lenkmotoren.

Für Servo-Lenksysteme, für die mittlerweile aufkommenden autonomen Fahrfunktionen und erst recht für Fahrzeuge mit Steer-by-Wire Systemen ist die Lenkung natürlich ein absolut sicherheitsrelevantes Bauteil.

Das gilt auch für die dort eingesetzten Getriebe. Neben den oft verwendeten Schneckengetrieben sind bei elektromechanischen Servo-Lenksystemen auch Riemengetriebe im Einsatz, bei denen das durch einen Elektromotor erzeugte Unterstützungsmoment über einen üblicherweise schrägverzahnten Zahnriemen und entsprechend ausgebildete Zahnräder von der Motorwelle z.B. auf eine auf die Zahnstange wirkende Kugelgewindespindel übertragen wird. Solche Zahnriemen müssen erhebliche Lenkkräfte und Schwingungen übertragen und müssen mit einer hohen Sicherheit und Redundanz ausgelegt werden, so dass innerhalb der Wartungsintervalle und Wartungsmaßnahmen keinerlei Schädigungen zu befürchten sind. Die Zahnriemen bestehen grundsätzlich aus einem so genannten Unterbau, der das Zahnprofil aufweist, mindestens einer Lage von in Riemenlängsrichtung angeordneten Zugsträngen bzw. Festigkeitsträgern und aus dem Riemenrücken. Zahnprofil und Riemenrücken können dabei je nach Anwendungsfall mit weiteren Beschichtungen oder Geweben versehen sein.

Üblicherweise kommen hier Zahnriemen aus elastomerem Material zum Einsatz, die mit Zugsträngen bzw. Festigkeitsträgern aus z.B. Glasfasern versehen sind. Solche Zugstränge aus Glasfasern haben sich bewährt aufgrund ihrer geringen Wärmeausdehnung, ihrer Temperaturresistenz und insbesondere aufgrund ihrer dynamischen Stabilität, d.h. ihrer Toleranz gegenüber hochfrequenten, wechselnden Schwingungsbelastungen, wie sie in einem Lenkgetriebe auftreten können. Auch bei diesen Bedingungen behalten Zahnriemen mit Zugsträngen aus Glasfasern lange ihre Festigkeit.

Leider besitzen Antriebsriemen mit Zugsträngen aus Glasfasern auch einige Nachteile, die manchmal ihren Einsatz erheblich einschränken können. Zugstränge aus Glasfasern oder aus Glasfasern hergestellt Corde sind nur bedingt hydrolysebeständig, verlieren also unter dem Einfluss von Feuchtigkeit einen Teil ihrer ursprünglich vorhandenen Festigkeit, so dass bei Lastspitzen die Gefahr besteht, dass die Riemen geschädigt werden könnten. Das ist zwar solange unkritisch, wie die Glasfasern vor Feuchtigkeit geschützt werden und durch das elastomere Material umgeben sind, kann aber bedenklich werden, wenn durch Verschleiß, etwa durch Anlaufen an Begrenzungsscheiben, die Glasfasern Feuchtigkeit aus der Umgebung aufnehmen können.

Ein weiterer Nachteil ist die Empfindlichkeit von Glasfasern bzw. Glasfasercorden gegen Knicken. Solche Knickbelastungen können dann auftreten, wenn die Antriebsriemen etwa beim Einbau oder beim Transport unsachgemäß behandelt werden. An der Knickstelle der Riemen und damit der Glasfaser-Zugstränge ist dann die erforderliche Festigkeit nicht mehr ohne weiteres zu garantieren.

Auf der anderen Seite sind Antriebsriemen mit Zugsträngen aus Aramidfasern bisher nur bei relativ langsam laufenden Getrieben mit niedrigeren Umdrehungen eingesetzt worden, bei denen also die Frequenz der Schwellbelastungen und der Belastung durch Biegewechsel für den aramidverstärkten Riemen relativ niedrig ist. Werden die Umdrehungen und damit diese Belastungsfrequenzen nämlich zu hoch, so neigt ein Antriebsriemen mit Zugsträngen aus Aramidfasern dazu, nach einer gewissen Zeit in seinen Festigkeiten abzusinken. Aus diesem Grunde werden Zugriemen mit Aramid-Zugsträngen in Kraftfahrzeugen nicht im Bereich der Nockenwellen, nicht bei Antrieben von Öl oder Wasserpumpen und schon gar nicht bei Lenkungen verbaut.

Bei dem Einsatz von Antriebsriemen für Lenkungen ergibt sich somit eine Art Zielkonflikt. Einerseits möchte man auf die Antriebsriemen mit Zugsträngen aus Glasfasern gern verzichten und durch feuchtigkeitsbeständigere und gegen Knicken unempfindlichere Antriebsriemen mit Zugträgern aus Aramid bzw. Aramidcorden ersetzen, andererseits sind die bisherigen Konstruktionen von Antriebsriemen/Zugriemen mit Aramidcorden nicht besonders gut für die hohen Belastungsfrequenzen in einem Lenkungsgetriebe geeignet.

Für die Erfindung bestand also die Aufgabe, in Überwindung dieses Zielkonflikte einen Antriebsriemen bereitzustellen, der für die hochfrequenten Schwell- und Biegebelastungen in einem Lenkungsgetriebe gut geeignet ist, der hydrolysebeständig ist, der gegenüber dynamischen Belastungen stabil bleibt, der unempfindlich gegenüber Knicken und gegenüber Handhabungs- und Transportbelastungen ist und der einfach und mit den üblichen Methoden kostengünstig hergestellt werden kann.

Gelöst wird diese Aufgabe durch die Merkmale des Hauptanspruchs. Weitere vorteilhafte Ausbildungen sind in den Unteransprüchen enthalten. Ebenfalls ist ein Lenkungsgetriebe mit einem solchen Antriebsriemen sowie eine geeignete Art zu seiner Herstellung offenbart.

Überraschenderweise hatte sich nämlich gezeigt, dass die erfindungsgemäße konstruktive Veränderung der üblichen Bauweisen von Antriebsriemen mit Zugsträngen aus Aramidfasern zu einem Antriebsriemen führt, der in bester Weise allen Anforderungen für einen Einsatz in einem Lenkungsgetriebe gerecht wird. Dabei weisen die Zugstränge des erfindungsgemäßen Antriebsriemens jeweils nur zwei Litzen aus Aramidfasern auf, wobei sowohl jede der Litzen eine erste Drehung aufweist als auch die Litzen zur Bildung des Zugstrangs mit einer zweiten Drehung umeinandergedreht, d.h. verzwirnt sind.

Im Fachjargon bezeichnet man bei der Beschreibung der Konstruktion der Zugstränge oder Corde die Drehung der Faserbündel als solcher als "erste Drehung" und die Drehung der Faserbündel umeinander als "zweite Drehung".

Der Außendurchmesser der Zugstränge ist dabei kleiner als 0,5 mm und liegt vorzugsweise zwischen 0,3 und 0,4 mm.

Die Zugstränge bilden so also gemäß der Definition nach DIN 60 900 Teil 1 eine besondere Art von Zwirn, bei dem die beiden Litzen aus gedrehten Aramidgarnen gebildet sind. Die Aramidgarne bestehen dabei jeweils aus einem Bündel von mehreren Hundert gedrehten Aramidfilamenten oder -fasern. Der Durchmesser jedes einzelnen Filaments bzw. jeder einzelnen Faser beträgt etwa 7-9 µm. Als Zugstrang entsteht so ein linienförmiges textiles Gebilde aus zwei Litzen, welches einen sehr geringen Durchmesser von weniger als 0,5 mm aufweist, vorzugsweise von 0,3 bis 0,4 mm.

Auf vorteilhafte Weise weist mindestens eine der Litzen eine erste Drehung auf, die größer als 300 ist, vorzugsweise größer als 400 ist (bezogen auf den Meter, gemäß DIN 60900 Teil 4). Zusammen mit der Konstruktion der Zugstränge ergibt sich dadurch eine erhebliche Erhöhung der Zugfestigkeit des Antriebsriemens, ohne dass die Steifigkeit oder die hohe Belastbarkeit bei hohen Frequenzen beeinflusst werden.

Der Vorteil einer solchen Konstruktion von Zugsträngen und Riemen besteht im Wesentlichen darin, dass durch die Feinheit und durch die Geometrie der Litzen und der Zugstränge eine hohe Festigkeit gegenüber Beanspruchungen bei hochfrequenten Belastungen und Biegewechseln erreicht wird, die bei anderen Zugträgerkonstruktionen größeren Durchmessers nicht möglich ist.

Im Hinblick auf die auch bei Garnen und Zugsträngen einer solchen Feinheit erforderliche hohe Festigkeit besteht eine vorteilhafte Ausbildung darin, dass der über 10 nebeneinander liegende Zugstränge gemittelte Abstand zweier benachbarter Zugstränge im Bereich des 1,2-fachen bis 1,7-fachen des Außendurchmessers des Zugstrangs liegt.

Eine weitere vorteilhafte Ausbildung besteht darin, dass beide Litzen eine erste Drehung aufweisen, die größer als 300, vorzugsweise größer als 400 ist.

Durch eine solche Konstruktion wird die Festigkeit der Zugträger bzw. Corde und damit der Antriebsriemen erhöht. In Diesem Sinne wirkt auch eine weitere vorteilhafte Ausbildung, die darin besteht, dass die zweite Drehung der Litzen umeinander größer als 300 ist, vorzugsweise größer als 400.

Eine weitere vorteilhafte Ausbildung besteht darin, dass zur Vermeidung der Drall- oder Ablaufneigung des gesamten Antriebsriemens die Litzen von im Antriebsriemen nebeneinander liegenden Zugsträngen abwechselnd oder gruppenweise abwechselnd im S-Schlag und im Z-Schlag umeinander gedreht sind.

Eine weitere vorteilhafte Ausbildung besteht darin, dass das elastomere Material im wesentlichen Polyalphaolefin-Kautschuk aufweist, vorzugsweise zu mehr als 60 phr (parts per hundred rubber), insbesondere Ethylen-Propylen-Copolymer (EPM) oder Ethylen-Propylen-Dien-Kautschuke (EPDM).

Poly -Alpha - Olefinkautschuke wie EPDM oder EPM haben gegenüber Polychloropren oder Polyurethan den entscheidenden Vorteil der verbesserten Tieftemperaturflexibilität und der entscheidend besseren Alterungsbeständigkeit. Zahnriemen aus EPDM können bei Temperaturen wesentlich kleiner als -40°C eingesetzt werden. Sie sind Dauerstabil selbst bei 130°C. Riemen Aus HNBR haben auch im Vergleich zu EPDM, Polychloropren und Polyurethan eine wesentlich bessere Beständigkeit gegen alle möglichen Sorten von Ölen, was gerade im Bereich von Anwendungen in Kraftfahrzeugen und da besonders von Lenkungen von Vorteil ist.

Eine weitere vorteilhafte Ausbildung besteht darin, dass das elastomere Material im Wesentlichen teil- oder vollhydrierten Nitrilkautschuk (HNBR) aufweist, vorzugsweise zu mehr als 60 phr (parts per hundred rubber).

Eine weitere vorteilhafte Ausbildung besteht darin, dass das elastomere Material unter Verwendung von Peroxiden vernetzt ist. EPDM und HNBR lassen sich im Prinzip mit Harzen, mit Schwefel oder peroxidisch vernetzen. Die Verwendung von Peroxiden zur Vernetzung führt, insbesondere in Anwesenheit von Acrylaten, Acrylatsalzen oder Salzen alpa-beta ungesättigter Carbonsäuren zu hochwärmefesten und gleichzeitig dynamisch stabilen Vulkanisaten, wie sie im Riemen benötigt werden. Schwefelvernetzungen ergeben signifikant schlechtere Wärmebeständigkeiten, Harzvernetzungen schlechtere dynamische Beständigkeit.

Besonders geeignet zur Herstellung eines Zugstrangs eines Antriebsriemens, bei dem beide Litzen Drehungen aufweisen, die größer als 300 sind, ist der so genannte Direktkablierungsprozess. Bei betragsmäßig gleichen Drehungen zwischen erster und zweiter Drehung lässt sich durch eine Direktkablierung ein solcher Zugstrang kostengünstig in nur einem Fertigungsschritt herstellen.

Neben anderen Anwendungsgebieten ist der erfindungsgemäße Antriebsriemen aufgrund der Belastungssituation besonders geeignet, in einem Lenkungsgetriebe in einer elektromechanischen Lenkung eines Kraftfahrzeugs eingesetzt zu werden.

Anhand eines Ausführungsbeispiels soll die Erfindung näher erläutert werden. Es zeigen
- Fig. 1: einen erfindungsgemäßen Antriebsriemen für ein Lenkungsgetriebe
- Fig. 2: einen Zugstrang des Antriebsriemens nach Fig. 1 in perspektivischer Vergrößerung

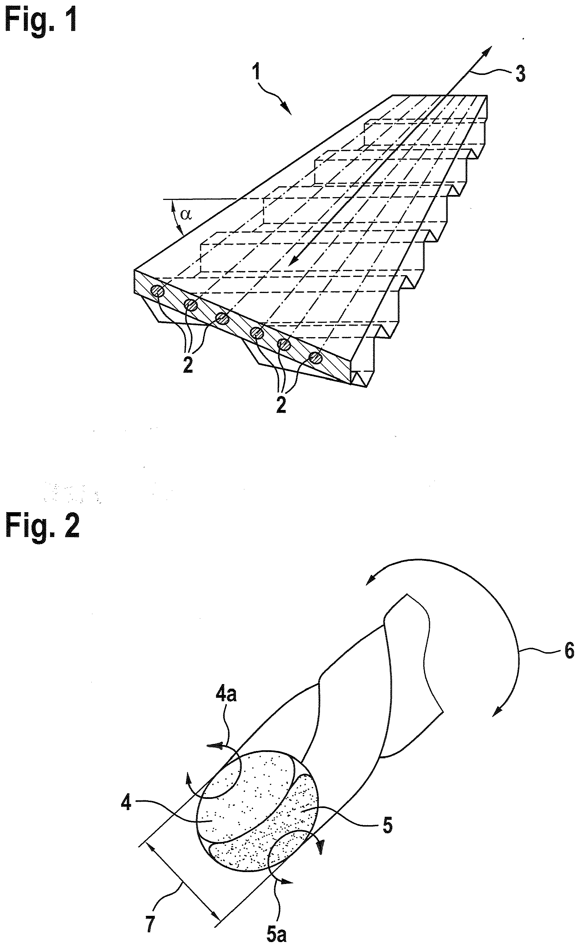

Die Fig. 1 zeigt einen erfindungsgemäßen schrägverzahnten Antriebsriemen 1 für ein Lenkungsgetriebe aus elastomerem Material, nämlich bestehend aus 75 phr EPDM. Der Antriebsriemen ist mit innenliegenden und in Längsrichtung des Antriebsriemens angeordneten Zugsträngen 2 aus Aramidfasern versehen. Die Zähne des Antriebsriemens sind um den Winkel □ zur Längsrichtung 3 des Riemens geneigt.

Fig. 2 zeigt lediglich als Prinzipskizze und qualitativ einen Zugstrang in perspektivischer Vergrößerung. Man erkennt hier, dass die Zugstränge 2 jeweils zwei Litzen 4, 5 aufweisen

Die Litzen bestehen aus Aramidfasern. Jede der Litzen weist eine erste Drehung auf, die hier der Übersicht halber nur symbolisch mit den Pfeilen 4a und 4b eingezeichnet ist. Pfeile an beiden Enden verdeutlichen, dass die Drehrichtung jeweils nicht beschränkt ist. Auch die Litzen 4 und 5 sind als solche zur Bildung des Zugstrangs 2 umeinander gedreht, d.h. verzwirnt. Die Verdrehung der Litzen - der Zwirn - ist mit dem Pfeil 6 symbolisiert. Diese Verdrehung 6 der Litzen erfolgt bei nebeneinanderliegenden Litzen abwechselnd als S- oder Z-Drehung. Der Außendurchmesser 7 des Zugstrangs beträgt hierbei als 0,35 mm.

Bezogen auf den Meter, gemäß DIN 60900 Teil 4 beträgt die erste Drehung der Litze 4 in der Drehrichtung 4a hier 450/m, die erste Drehung der Litze 5 in der Drehrichtung 5a ebenfalls 450/m. Darüber hinaus beträgt die zweite Drehung 6 der Litzen umeinander hier ebenfalls 450/m.

### Bezugszeichenliste

- 1: schrägverzahnter Antriebsriemen
- 2: Zugstrang
- 3: Längsrichtung des Antriebsriemens
- 4: Litze
- 4a: Drehung der Litze 4
- 5: Litze
- 5a: Drehung der Litze 5
- 6: Drehung der Litzen umeinander (Zwirn)
- 7: Außendurchmesser des Zugstrangs

## Patentansprüche

1. Schrägverzahnter Antriebsriemen (1) aus elastomerem Material mit innenliegenden und in Längsrichtung des Antriebsriemens angeordneten Zugsträngen (2) aus Aramidfasern, wobei die Zugstränge jeweils zwei Litzen (4, 5) aus Aramidfasern aufweisen, wobei sowohl jede der Litzen eine erste Drehung (4a, 5a) aufweist als auch die Litzen zur Bildung des Zugstrangs mit einer zweiten Drehung (6) umeinander gedreht sind und der Außendurchmesser (7) des Zugstrangs kleiner als 0,5 mm ist, vorzugsweise zwischen 0,3 und 0,4 mm liegt,
**dadurch gekennzeichnet, dass**
dem mindestens eine der Litzen eine erste Drehung aufweist, die größer als 300 ist, vorzugsweise größer als 400 ist jeweils bezogen auf den Meter, gemäß DIN 60900 Teil 4.

2. Schrägverzahnter Antriebsriemen nach Anspruch 1, bei dem der über 10 nebeneinander liegende Zugstränge gemittelte Abstand zweier benachbarter Zugstränge im Bereich des 1,2-fachen bis 1,7-fachen des Außendurchmessers des Zugstrangs liegt.

3. Schrägverzahnter Antriebsriemen nach einem der Ansprüche 1 bis 2, bei dem beide Litzen eine erste Drehung aufweisen, die größer als 300 ist, vorzugsweise größer als 400 ist.

4. Schrägverzahnter Antriebsriemen nach einem der Ansprüche 1 bis 3, bei dem die zweite Drehung der Litzen umeinander größer als 300 ist, vorzugsweise größer als 400.

5. Schrägverzahnter Antriebsriemen nach einem der Ansprüche 1 bis 4, bei dem die Litzen von im Antriebsriemen nebeneinander liegenden Zugsträngen abwechselnd oder gruppenweise abwechselnd im S-Schlag und im Z-Schlag umeinander gedreht sind.

6. Schrägverzahnter Antriebsriemen nach einem der Ansprüche 1 bis 5, bei dem das elastomere Material im wesentlichen Polyalphaolefin-Kautschuk aufweist, vorzugsweise zu mehr als 60 phr parts per hundred rubber, insbesondere Ethylen-Propylen-Copolymer (EPM) oder Ethylen-Propylen-Dien-Kautschuke (EPDM).

7. Schrägverzahnter Antriebsriemen nach einem der Ansprüche 1 bis 5, bei dem das elastomere Material im Wesentlichen teil- oder vollhydrierten Nitrilkautschuk (HNBR) aufweist, vorzugsweise zu mehr als 60 phr parts per hundred rubb er.

8. Schrägverzahnter Antriebsriemen nach einem der Ansprüche 1 bis 7, bei dem das elastomere Material unter Verwendung von Peroxiden vernetzt ist.

9. Lenkungsgetriebe in einer elektromechanischen Lenkung eines Kraftfahrzeugs mit einem schrägverzahnten Antriebsriemen nach einem der Ansprüche 1 bis 8.

## Claims

1. A helically toothed drive belt (1) made of elastomeric material having internal tensile cords (2) made of aramid fibers, which tensile cords are arranged in the longitudinal direction of the drive belt, wherein the tensile cords each have two strands (4, 5) made of aramid fibers, wherein each of the strands has a first twist (4a, 5a) and the strands are also twisted around one another with a second twist (6) to form the tensile cord, and the outside diameter (7) of the tensile cord is less than 0.5 mm, preferably between 0.3 and 0.4 mm.
**characterized in that**
at least one of the strands has a first twist which is greater than 300, preferably greater than 400 (in each case based on the meter, in accordance with DIN 60900 Part 4).

2. The helically toothed drive belt as claimed in claim 1, in which the spacing between two adjacent tensile cords, averaged over 10 adjacent tensile cords, is in the region of 1.2 times to 1.7 times the outside diameter of the tensile cord.

3. The helically toothed drive belt as claimed in any of claims 1 to 2, in which both strands have a first twist which is greater than 300, preferably greater than 400.

4. The helically toothed drive belt as claimed in any of claims 1 to 3, in which the second twist of the strands around one another is greater than 300, preferably greater than 400.

5. The helically toothed drive belt as claimed in any of claims 1 to 4, in which the strands of tensile cords situated adjacent to one another in the drive belt are twisted around one another alternately or alternately in groups with an S twist and a Z twist.

6. The helically toothed drive belt as claimed in any of claims 1 to 5, in which the elastomeric material substantially comprises polyalphaolefin rubber, preferably in a proportion of more than 60 phr (parts per hundred rubber), in particular ethylene-propylene copolymer (EPM) or ethylene-propylene-diene rubbers (EPDM).

7. The helically toothed drive belt as claimed in any of claims 1 to 5, in which the elastomeric material substantially comprises partially or fully hydrogenated nitrile rubber (HNBR), preferably in a proportion of more than 60 phr (parts per hundred rubber).

8. The helically toothed drive belt as claimed in any of claims 1 to 7, in which the elastomeric material is cross-linked using peroxides.

9. A steering gear in an electromechanical steering system of a motor vehicle having a helically toothed drive belt as claimed in any of claims 1 to 8.

## Revendications

1. Courroie d'entraînement à denture hélicoïdale (1) en matériau élastomère, avec des brins de traction (2) en fibres d'aramide situés à l'intérieur et agencés dans la direction longitudinale de la courroie d'entraînement, les brins de traction présentant chacun deux torons (4, 5) en fibres d'aramide, à la fois chacun des torons présentant une première torsion (4a, 5a) et les torons étant tournés l'un autour de l'autres avec une deuxième torsion (6) pour former le brin de traction, et le diamètre extérieur (7) du brin de traction étant inférieur à 0,5 mm, de préférence compris entre 0,3 et 0,4 mm,
**caractérisée en ce que**
au moins un des torons présente une première torsion supérieure à 300, de préférence supérieure à 400, dans chaque cas par rapport au mètre, selon la norme DIN 60900 partie 4.

2. Courroie d'entraînement à denture hélicoïdale selon la revendication 1, dans laquelle la distance entre deux brins de traction voisins, moyennée sur 10 brins de traction juxtaposés, se situe dans la plage de 1,2 fois à 1,7 fois le diamètre extérieur du brin de traction.

3. Courroie d'entraînement à denture hélicoïdale selon l'une quelconque des revendications 1 à 2, dans laquelle les deux torons présentent une première torsion qui est supérieure à 300, de préférence supérieure à 400.

4. Courroie d'entraînement à denture hélicoïdale selon l'une quelconque des revendications 1 à 3, dans laquelle la deuxième rotation des torons l'un autour de l'autre est supérieure à 300, de préférence supérieure à 400.

5. Courroie d'entraînement à denture hélicoïdale selon l'une quelconque des revendications 1 à 4, dans laquelle les torons de brins de traction juxtaposés dans la courroie d'entraînement sont alternativement ou par groupes alternativement torsadés l'un autour de l'autre selon le câblage S et selon le câblage Z.

6. Courroie d'entraînement à denture hélicoïdale selon l'une quelconque des revendications 1 à 5, dans laquelle le matériau élastomère présente essentiellement du caoutchouc de polyalphaoléfine, de préférence à plus de 60 phr parties par cent de caoutchouc, notamment du copolymère d'éthylène-propylène (EPM) ou des caoutchoucs d'éthylène-propylène-diène (EPDM).

7. Courroie d'entraînement à denture hélicoïdale selon l'une quelconque des revendications 1 à 5, dans laquelle le matériau élastomère présente essentiellement du caoutchouc de nitrile partiellement ou totalement hydrogéné (HNBR), de préférence à plus de 60 phr parties par cent de caoutchouc.

8. Courroie d'entraînement à denture hélicoïdale selon l'une quelconque des revendications 1 à 7, dans laquelle le matériau élastomère est réticulé en utilisant des peroxydes.

9. Mécanisme de direction dans une direction électromécanique d'un véhicule automobile avec une courroie d'entraînement à denture hélicoïdale selon l'une quelconque des revendications 1 à 8.
